# EUROPÄISCHE PATENTANMELDUNG

(11) **EP 4 716 235 A1**
(43) Veröffentlichungstag der Anmeldung: **25.03.2026**
(21) Anmeldenummer: 25202337.9
(22) Anmeldetag: 16.09.2025
(51) Int. Cl.: H04R 1/02, H04R 1/34, B60R 11/02

(54) **LAUTSPRECHERANORDNUNG FÜR EIN KRAFTFAHRZEUG SOWIE KRAFTFAHRZEUG**

(30) Priorität: 23.09.2024 DE 102024127419
(71) Anmelder: AUDI Aktiengesellschaft, 85057 Ingolstadt (DE)
(72) Erfinder: HÉLOT, Jacques, 85051 Ingolstadt (DE); WEBER, Norbert, 85049 Ingolstadt (DE)
(74) Vertreter: RDL Patentanwälte PartG mbB

(57) **Zusammenfassung**

Lautsprecheranordnung (10) für ein Kraftfahrzeug (30), aufweisend einen in einem Verkleidungsteil (31) des Kraftfahrzeugs (30) wahlweise versenkbaren und aus diesem ausfahrbaren Lautsprecher (11) mit einem Schalllenkungskörper (12), der einen zentralen feststehenden Teil (13) mit einer Schallaustrittsöffnung (14) und wenigstens einer ersten Schalllenkungsfläche (15) sowie einen relativ und koaxial zum zentralen feststehenden Teil (13) drehbaren Teil (16) mit wenigstens einer zweiten Schalllenkungsfläche (17) aufweist, wobei der drehbare Teil (16) in einer Nichtgebrauchsstellung des Lautsprechers (11), in welcher der Lautsprecher (11) keinen Schall abgibt, derart gedreht ist, dass er die Schallaustrittsöffnung (14) vollständig und einstückig abdeckt, und der drehbare Teil (16) in einer Gebrauchsstellung des Lautsprechers (11), in welcher der Lautsprecher (11) Schall abgibt, derart gedreht ist, dass er die Schallaustrittsöffnung (14) freigibt und die wenigstens eine zweite Schalllenkungsfläche (17) gemeinsam mit der wenigstens einen ersten Schalllenkungsfläche (15) des zentralen feststehenden Teils (13) eine akustisch wirksame Gesamtschalllenkungsfläche (15, 17) bilden; ferner ein Kraftfahrzeug (30) mit einem Verkleidungsteil (31) und einer derartigen Lautsprecheranordnung (10).

## Beschreibung

Die Erfindung betrifft eine Lautsprecheranordnung für ein Kraftfahrzeug mit einem in einem Verkleidungsteil des Kraftfahrzeugs versenkbaren Lautsprecher. Die Erfindung betrifft ferner ein Kraftfahrzeug mit einer derartigen Lautsprecheranordnung.

In Kraftfahrzeugen sind High-End-Soundsysteme mit ausfahrbaren Hochtönern in einem Armaturenbrett im Bereich von A-Säulen bekannt. Die Hochtöner sind, wenn das Fahrzeug nicht in Betrieb ist, im Armaturenbrett eingefahren. Wenn das Fahrzeug gestartet wird, fahren diese aus dem Armaturenbrett heraus.

Beispielsweise beschreibt WO 2017/211365 A1 ein Hochtöner für ein Kraftfahrzeug, bei dem der Hochtöner in einem Armaturenbrett versenkbar ist und eine mechanisch verstellbare Abstrahlcharakteristik aufweist. Der Hochtöner weist zwei bewegbare, akustisch wirksame Flächen auf, um einen Raumbereich zu beeinflussen, in dem der Lautsprecher gut gehört werden soll.

Ein anderer ausfahrbarer Hochtöner für ein Kraftfahrzeug ist des Weiteren aus CN 211240024 U bekannt. Der Hochtöner ist in einem Armaturenbrett versenkbar und mit einer Beleuchtungsfunktion versehen. In einer Betriebs- bzw. Gebrauchsstellung ragt der Hochtöner aus dem Armaturenbrett hervor und ist beleuchtet, in einer Nichtgebrauchsstellung ist er in dem Armaturenbrett versenkt.

Eine ebenfalls versenkbare Lautsprechereinheit für ein Kraftfahrzeug offenbart WO 2024/107442 A1. Die Lautsprechereinheit weist zwei relativ zueinander rotierbare Gehäuseteile zur Freigabe und Verdeckung einer Lautsprechermembran auf.

Vor diesem Hintergrund liegt der Erfindung die Aufgabe zugrunde, Lösungen zur baulichen Vereinfachung einer Lautsprecheranordnung für ein Kraftfahrzeug sowie eines Kraftfahrzeugs mit einer Lautsprecheranordnung aufzuzeigen. Zugleich sollen diese Lösungen eine hohe Klangqualität sicherstellen. Darüber hinaus sollen die Lautsprecheranordnung und das Kraftfahrzeug visuell ansprechend sein.

Diese Aufgabe wird durch eine Lautsprecheranordnung mit den Merkmalen des Anspruchs 1 sowie durch ein Kraftfahrzeug mit den Merkmalen des Anspruchs 10 gelöst. Weitere besonders vorteilhafte Ausgestaltungen der Erfindung offenbaren die jeweiligen Unteransprüche.

Es sei angemerkt, dass die in den Ansprüchen einzeln aufgeführten Merkmale in beliebiger, technisch sinnvoller Weise miteinander kombiniert werden können (auch über Kategoriegrenzen, beispielsweise zwischen Verfahren und Vorrichtung, hinweg) und weitere Ausgestaltungen der Erfindung aufzeigen. Die Beschreibung charakterisiert und spezifiziert die Erfindung insbesondere im Zusammenhang mit den Figuren zusätzlich.

Es sei ferner darauf hingewiesen, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Der Begriff "etwa" gibt hierin einen Toleranzbereich an, den der auf dem vorliegenden Gebiet tätige Fachmann als üblich ansieht. Insbesondere ist unter dem Begriff "etwa" ein Toleranzbereich der bezogenen Größe von maximal +/-20 %, bevorzugt maximal +/-10 %, zu verstehen.

Gegenstand der Erfindung ist eine Lautsprecheranordnung für ein Kraftfahrzeug, die einen in einem Verkleidungsteil (z. B. Armaturenbrett, Türverkleidung, Dachhimmel, Mittelkonsole, Fahrzeugsäule o. ä.) des Kraftfahrzeugs wahlweise versenkbaren und aus diesem ausfahrbaren Lautsprecher (z. B. ein Hochtöner) aufweist. Der Lautsprecher weist wiederum einen Schalllenkungskörper auf, mit dem ein von einem Schallerzeuger (z. B. einer Membran) des Lautsprechers erzeugter Schall in eine bestimmte Raumrichtung gelenkt wird. Der Schalllenkungskörper weist einen zentralen feststehenden Teil mit einer Schallaustrittsöffnung, aus welcher der vom Lautsprecher erzeugte Schall in einen den Lautsprecher umgebenden Raum austreten kann, und wenigstens einer ersten Schalllenkungsfläche sowie einen relativ und koaxial zum zentralen feststehenden Teil drehbaren Teil mit wenigstens einer zweiten Schalllenkungsfläche auf. Die Erfindung sieht vor, dass der drehbare Teil in einer Nichtgebrauchsstellung des Lautsprechers, in welcher der Lautsprecher keinen Schall abgibt, derart gedreht ist, dass er die Schallaustrittsöffnung vollständig und einstückig abdeckt, und der drehbare Teil in einer Gebrauchsstellung des Lautsprechers, in welcher der Lautsprecher Schall abgibt, derart gedreht ist, dass er die Schallaustrittsöffnung freigibt, insbesondere vollständig freigibt, und die wenigstens eine zweite Schalllenkungsfläche gemeinsam mit der wenigstens einen ersten Schalllenkungsfläche des zentralen feststehenden Teils eine akustisch wirksame Gesamtschalllenkungsfläche bilden.

Der Schalllenkungskörper weist grundsätzlich eine vorbestimmte Geometrie für eine optimale Klangqualität des Lautsprechers auf. Diese wird wesentlich sowohl durch die Geometrie der Schallaustrittsöffnung als auch durch die Geometrie und Schallreflexionseigenschaften der wenigstens einen ersten Schalllenkungsfläche und der wenigstens einen zweiten Schalllenkungsfläche beeinflusst, die in der Gebrauchsstellung daher die akustisch wirksame Gesamtschalllenkungsfläche bilden. Nach dem Austreten des Schalls aus der Schallaustrittsöffnung in den den Lautsprecher umgebenden Raum wird der Schall zusätzlich an der wenigstens einen ersten und an der wenigstens einen zweiten Schalllenkungsfläche reflektiert und auf diese Weise in eine vorbestimmte Richtung gelenkt. Die Schalllenkungsflächen sind hierzu im Wesentlichen benachbart zur Schallaustrittsöffnung, z. B. in einem die Schallaustrittsöffnung umgebenden, peripheren Bereich, angeordnet. Die Erfindung sieht vor, dass die den vom Lautsprecher erzeugten Schall lenkenden Schalllenkungsflächen nicht aus einer einzigen, integralen Komponente gebildet sind, sondern aus einer dem zentralen feststehenden Teil zugeordneten ersten Komponente (d. h. der ersten Schalllenkungsfläche) und einer dem drehbaren Teil zugeordneten zweiten Komponente (d. h. der zweiten Schalllenkungsfläche), die in der Gebrauchsstellung des Lautsprechers eine gemeinsame akustisch wirksame Gesamtschalllenkungsfläche bilden, um eine für eine hohe Klangqualität optimale Schallabstrahlung in den den Lautsprecher umgebenden Raum zu erreichen. Die in der Gebrauchsstellung aus der ersten Schalllenkungsfläche und der zweiten Schalllenkungsfläche gebildete Gesamtschalllenkungsfläche kann insbesondere eine stetige, d. h. im Wesentlichen stufenlose, Fläche sein. Die gebildete Gesamtschalllenkungsfläche kann zum Beispiel eine vollständige oder abschnittsweise ebene (plane) Erstreckung oder eine vollständige oder teilweise gewölbte Erstreckung oder eine Kombination aus einer teilweise ebenen (planen) und einer teilweise gewölbten Erstreckung aufweisen.

In der geschlossenen Stellung bzw. Nichtgebrauchsstellung des Lautsprechers wird wenigstens die Schallaustrittsöffnung von dem drehbaren Teil vollständig und mit einem nicht gebrochenen, d. h. integralen, öffnungs- und spaltfreien Abschnitt abgedeckt.

Die vollständige Abdeckung verhindert wirksam das Eintreten von Verunreinigungen oder Gegenständen durch die Schallaustrittsöffnung in den Schalllenkungskörper, so dass die hohe Klangqualität über die gesamte Betriebs- bzw. Lebensdauer des Lautsprechers gewährleistet ist. Zudem erzeugt die integrale Abdeckung einen visuell ansprechenden Eindruck, der keinerlei Hinweise auf die verborgene Schallaustrittsöffnung liefert.

Darüber hinaus verleiht die Erfindung der Lautsprecheranordnung einen hochwertigen Eindruck, der u. a. durch die Bewegung des drehbaren Teils unterstützt oder verstärkt wird und eine Aufmerksamkeit erzeugende Inszenierung ermöglicht.

Der drehbare Teil stellt sowohl eine Schutzfunktion als auch eine Klangoptimierungsfunktion mit einem die koaxiale Drehung relativ zum feststehenden Teil realisierenden einfachen Aufbau bereit. Der drehbare Teil kann beispielsweise über einen Zahnrad-, Riemen- oder ähnlichen Antrieb in die koaxiale Drehbewegung versetzt werden.

In der Nichtgebrauchsstellung kann der Lautsprecher in dem Verkleidungsteil versenkt sein. In der Gebrauchsstellung ist der Lautsprecher aus dem Verkleidungsteil ausgefahren. Die versenkte Position und die ausgefahrene Position können jeweils durch eine im Wesentlichen translatorische Bewegung des Lautsprechers mittels einer entsprechenden Kinematik eingenommen werden.

Die translatorische Bewegung des Lautsprechers und die Drehbewegung des drehbaren Teils können miteinander gekoppelte Bewegungen sein. Sie sind jedoch bevorzugt voneinander unabhängig steuerbare Bewegungen, so dass diese in gewünschter Weise miteinander kombiniert werden können. Die Drehbewegung kann beispielsweise gleichzeitig mit der translatorischen Bewegung ausgeführt werden oder erst im Anschluss an das Ausfahren des Lautsprechers aus dem Verkleidungsteil erfolgen. Letzteres stellt eine besonders bevorzugte Ausführungsform dar.

In einer bevorzugten Ausführungsform ist der drehbare Teil einstückig als Ringsegment ausgebildet, was einen einfachen Aufbau der Lautsprecheranordnung ermöglicht, da nur ein einziger Teil drehbeweglich zu lagern ist.

Das Ringsegment bildet keinen geschlossenen Ring, sondern erstreckt sich über einen solchen Winkel, der jedenfalls die Abdeckung der Schallaustrittsöffnung ermöglicht. Es versteht sich, dass die Erstreckung des Ringsegments über diesen Minimalwinkel hinausgehen kann und jeden Winkel umfassen kann, der größer oder gleich dem Minimalwinkel, jedoch kleiner als 360 ° abzüglich dieses Minimalwinkels ist (z. B. kleiner oder etwa gleich 300 °), so dass die Schallaustrittsöffnung in der Gebrauchsstellung des Lautsprechers in jedem Fall vollständig freigegeben ist und folglich in jedem Fall eine hohe Klangqualität gewährleistet ist.

An den beiden Querschnittsendflächen des Ringsegments können jeweils die zweiten Schalllenkungsflächen ausgebildet sein.

In weiteren vorteilhaften Ausführungsformen deckt der drehbare Teil in der Nichtgebrauchsstellung des Lautsprechers die wenigstens eine erste Schalllenkungsfläche zusätzlich zur Schallaustrittsöffnung zumindest teilweise ab, was einen zusätzlichen Schutz der ersten Schalllenkungsfläche beispielsweise vor einer Beschädigung, Verschmutzung o. ä. bietet und eine hohe Klangqualität der Lautsprecheranordnung über die gesamte Lebensdauer gewährleistet.

In einer anderen bevorzugten Ausführungsform ist der drehbare Teil in der Gebrauchsstellung im Wesentlichen um 180 ° gegenüber der Nichtgebrauchsstellung gedreht.

In wiederum anderen bevorzugten Ausführungsformen ist der drehbare Teil wenigstens zu einem Teil aus einem transparenten und/oder transluzenten Material, wie z. B. Glas, gebildet, wodurch ein hochwertiger visueller Eindruck bei einem Nutzer der Lautsprecheranordnung erzeugt wird. Eine Kombination eines teilweise transparenten und teilweise transluzenten Materials ermöglicht beispielsweise, grafische Symbole, Schriftzeichen und dergleichen für einen Nutzer auf dem ansonsten transparenten drehbaren Teil deutlich erkennbar zu machen.

Zu Verstärkung einer von der Lautsprecheranordnung ausgehenden Signalwirkung sieht eine andere Ausführungsform ein Leuchtmittel (z. B. LED) zur wahlweisen Beleuchtung des drehbaren Teils in der Nichtgebrauchsstellung und/oder in der Gebrauchsstellung vor. Eine gewisse Signalwirkung der Lautsprecheranordnung geht bereits von der Möglichkeit aus, den im Verkleidungsteil versenkten Lautsprecher aus diesem auszufahren. Diese Signalwirkung wird durch die Beleuchtung weiter verstärkt. Bereits im versenkten Zustand kann die Beleuchtung des drehbaren Teil aktiviert werden, zum Beispiel bei einer Annäherung eines Nutzers an ein Fahrzeug, in welchem die erfindungsgemäße Lautsprecheranordnung verbaut ist.

In einer anderen vorteilhaften Weiterbildung des Erfindungsgegenstands ist ein Lichtleiter zur gezielten Führung und Verteilung von emittiertem Licht des Leuchtmittels vorgesehen. Der Lichtleiter ist nicht auf eine bestimmte Form oder Geometrie beschränkt. Diese kann je nach Anwendungsfall gewählt werden, um beispielsweise eine punkt- oder bereichsförmige Beleuchtung innerhalb oder außerhalb des drehbaren Teils zu erzielen. Eine vollflächige gleichmäßige Beleuchtung des drehbaren Teils kann zum Beispiel mit einem im Wesentlichen flächigen Lichtleiter, z. B. einer Lichtleiterscheibe, erzielt werden.

In einer noch anderen vorteilhaften Ausführungsform ist der Lautsprecher zu seiner ausschließlichen Verwendung in der Nichtgebrauchsstellung wahlweise aus dem Verkleidungsteil ausfahrbar. Hierunter ist zu verstehen, dass der Lautsprecher, obwohl an sich keine Verwendung in seiner Gebrauchsstellung vorgesehen ist, bei vorbestimmbaren Umständen aus dem Verkleidungsteil ausgefahren werden kann und ggf. zusätzlich eine Beleuchtung des drehbaren Teils aktiviert werden kann, sofern eine Beleuchtung des drehbaren Teils vorgesehen ist. Bereits das unerwartete Herausfahren des Lautsprechers bei Eintreten des vorbestimmbaren Umstands erzeugt eine gewünschte Aufmerksamkeit bei einem Nutzer. Diese kann genutzt werden, um beispielsweise darauf hinzuweisen, dass vor dem Verlassen eines Fahrzeugs, in welchem die erfindungsgemäße Lautsprecheranordnung verbaut ist, eine vorzunehmende Handlung seitens des Nutzer ausgeblieben ist (z. B. etwas im Fahrzeug liegengelassen wurde, die Fenster zu schließen sind, das Fahrzeug gegen unbeabsichtigtes Wegrollen zu sichern ist o. ä.).

Zur weiteren Optimierung des Klangs sieht eine andere vorteilhafte Ausführungsform vor, dass der zentrale feststehende Teil und der drehbare Teil aus unterschiedlich akustisch wirksamen Werkstoffen gebildet sind und/oder die erste Schalllenkungsfläche und die zweite Schalllenkungsfläche unterschiedlich akustisch wirksame Oberflächen aufweisen. Beispielsweise können die Schalllenkungsflächen eine unterschiedliche Rauigkeit, Strukturierung, Profilierung o. ä. aufweisen. Durch unterschiedliche Werkstoffe des feststehenden und des drehbaren Teils lassen sich die akustischen Eigenschaften mit einer gewünschten Absicht zielgerichtet beeinflussen. Zudem lassen sich durch die unabhängige Wahl vorbestimmter Werkstoffe visuell ansprechende und hochwertige Konfigurationen der Lautsprecheranordnung erzielen.

Weiter ist Gegenstand der Erfindung ein Kraftfahrzeug mit einem Verkleidungsteil und einer Lautsprecheranordnung, die nach einer der hierin offenbarten Ausführungsformen ausgebildet ist.

Es ist zu verstehen, dass bezüglich fahrzeugbezogener Begriffsdefinitionen sowie der Wirkungen und Vorteile fahrzeuggemäßer Merkmale vollumfänglich auf die Offenbarung sinngemäßer Definitionen, Wirkungen und Vorteile der erfindungsgemäßen Lautsprecheranordnung zurückgegriffen werden kann und umgekehrt. Auf eine Wiederholung von Erläuterungen sinngemäß gleicher Merkmale, deren Wirkungen und Vorteile kann somit zugunsten einer kompakteren Beschreibung verzichtet werden, ohne dass derartige Auslassungen als Einschränkung für einen der offenbarten Erfindungsgegenstände auszulegen wären.

Verkleidungsteile, in welche der Lautsprecher der Lautsprecheranordnung wahlweise versenkbar ist, sind zum Beispiel ein Armaturenbrett, eine Türverkleidung, ein Dachhimmel, eine Mittelkonsole, eine Fahrzeugsäule wie beispielsweise eine A-Säule und dergleichen.

Das Fahrzeug kann mehrere erfindungsgemäße Lautsprecheranordnungen aufweisen. Die drehbaren Teile dieser Lautsprecheranordnungen können sich in gegenläufige Drehrichtungen drehen.

In der im Verkleidungsteil versenkten Position des Lautsprechers fluchten der drehbare Teil und der zentrale feststehende Teil vorzugsweise mit einer Oberfläche des Verkleidungsteils und verdecken somit einen Hohlraum zur Aufnahme des Lautsprechers.

Bei einer Annäherung eines Nutzers an sein Fahrzeug, die beispielsweise mittels eines Fahrzeugschlüssels, einer Berührung des Fahrzeugs, einem mobilen Endgerät des Nutzers (z. B. Smartphone) und dergleichen feststellbar ist, kann der Lautsprecher bereits aus der im Verkleidungsteil versenkten Position in die ausgefahrene Position verfahren, in welcher der Lautsprecher zunächst in seiner Nichtgebrauchsstellung verbleibt oder bereits in seine Gebrauchsstellung wechselt, wodurch dem Nutzer visuell unterschiedliche Informationen mitgeteilt werden können.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert werden. In dieser Zeichnung zeigen schematisch:
- Figur 1: eine Teilexplosionsansicht eines Lautsprechers einer Lautsprecheranordnung nach einer Ausführungsform der Erfindung;
- Figur 2: eine Längsschnittansicht des Lautsprechers aus Figur 1;
- Figur 3: eine perspektivische Ansicht einer Lautsprecheranordnung sowie eines Fahrzeugs jeweils nach einer Ausführungsform der Erfindung in einer ersten Betriebssituation;
- Figur 4: die Lautsprecheranordnung sowie das Fahrzeug aus Figur 3 in einer zweiten Betriebssituation;
- Figur 5: eine vergrößerte Ansicht der Lautsprecheranordnung aus Figur 4 in der zweiten Betriebssituation;
- Figur 6: eine vergrößerte Ansicht der Lautsprecheranordnung aus Figur 3 in einer dritten Betriebssituation;
- Figur 7: eine vergrößerte Ansicht der Lautsprecheranordnung aus Figur 3 in einer vierten Betriebssituation; und
- Figur 8: eine vergrößerte Ansicht der Lautsprecheranordnung aus Figur 3 in einer fünften Betriebssituation.

In den unterschiedlichen Figuren sind hinsichtlich ihrer Funktion gleichwertige Teile stets mit denselben Bezugszeichen versehen, so dass diese in der Regel auch nur einmal beschrieben werden.

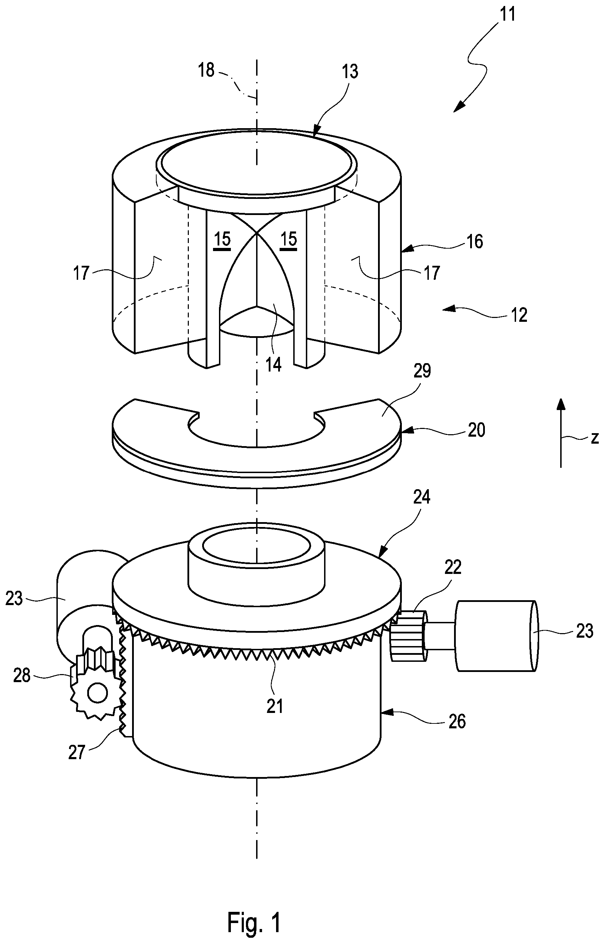

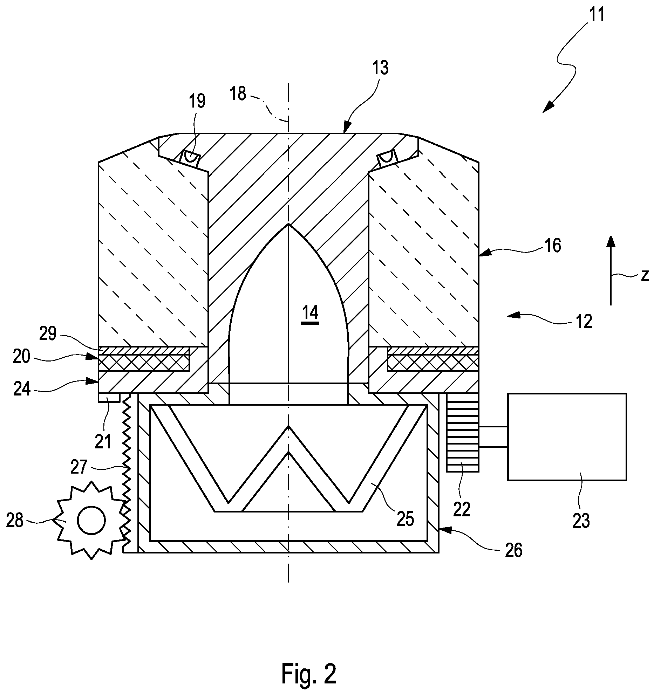

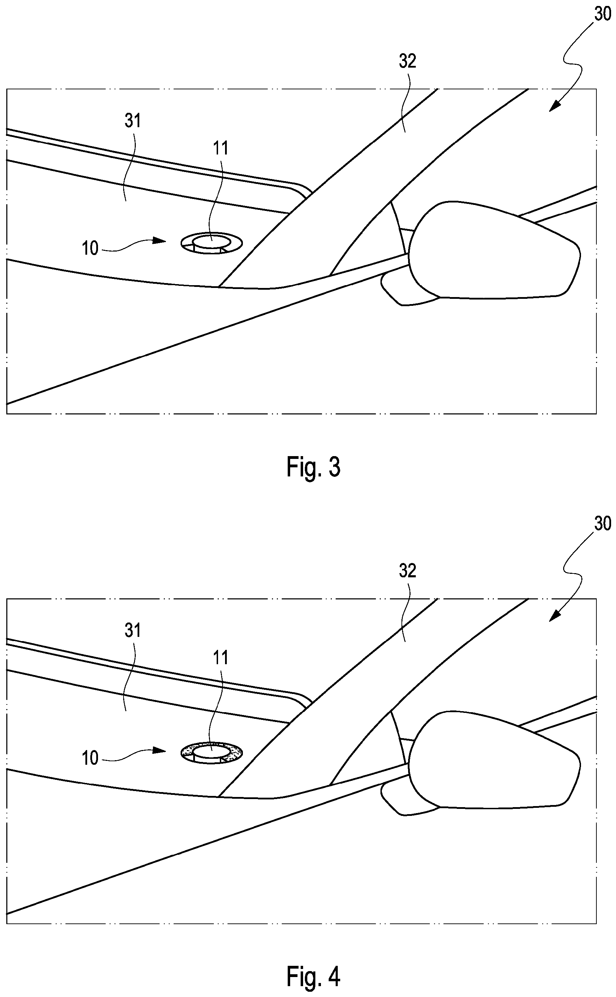

Figur 1 stellt schematisch eine Teilexplosionsansicht eines Lautsprechers 11 (z. B. eines Hochtöners) einer Lautsprecheranordnung 10 (vgl. Figuren 3-7) für ein Kraftfahrzeug 30 (vgl. Figuren 3-4) nach einer Ausführungsform der Erfindung dar. Figur 2 stellt den Lautsprecher 11 aus Figur 1 in einer Längsschnittansicht dar.

Das Kraftfahrzeug 30, das in den Figuren 3 bis 4 teilweise dargestellt ist, weist ein Verkleidungsteil 31 auf, das in dem dargestellten Beispiel ein Armaturenbrett ist. Mögliche andere Verkleidungsteile sind beispielsweise eine Türverkleidung, ein Dachhimmel, eine Mittelkonsole, eine Fahrzeugsäule (z. B. eine in Figur 3 gezeigte A-Säule 32). Es ist zu verstehen, dass diese Aufzählung nicht abschließend ist und weitere Verkleidungsteile eines Fahrzeugs ebenfalls zur Anordnung des Lautsprechers 11 im Sinne der Erfindung verwendet werden können.

In der nachfolgenden Beschreibung des Lautsprechers 11 wird zugleich Bezug auf beide Figuren 1 und 2 genommen.

Der in Figur 1 dargestellte Lautsprecher 11 ist in dem Verkleidungsteil (z. B. dem Armaturenbrett 31) des Kraftfahrzeugs 30 wahlweise versenkbar und aus diesem ausfahrbar. Der Lautsprecher 11 weist einen Schalllenkungskörper 12 auf, der einen zentralen feststehenden Teil 13 mit einer Schallaustrittsöffnung 14 und wenigstens einer ersten (vorliegend zwei ersten) Schalllenkungsfläche(n) 15 sowie einen relativ und koaxial zum zentralen feststehenden Teil 13 drehbaren Teil 16 mit wenigstens einer zweiten (vorliegend zwei zweiten) Schalllenkungsfläche(n) 17 aufweist. Der drehbare Teil 16 ist um eine Drehachse 18 drehbar, die zugleich eine Längsachse des feststehenden Teils 13 bildet. Die Drehachse 18 verläuft parallel zu einer Hochachse z des Lautsprechers 11.

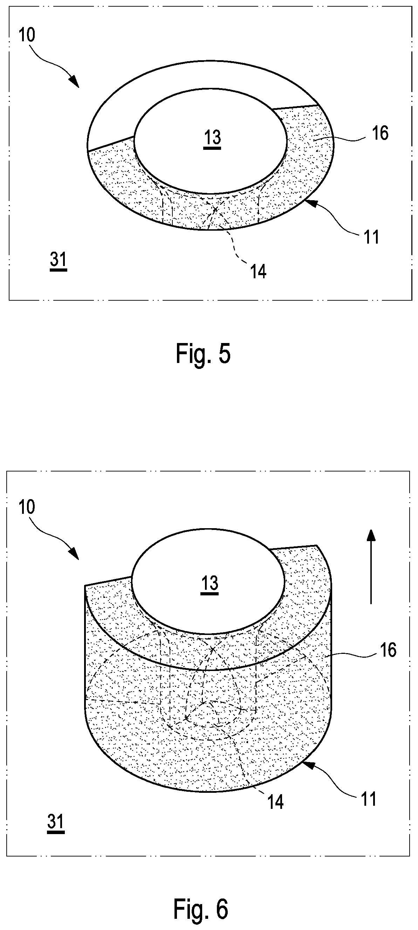

In einer Nichtgebrauchsstellung des Lautsprechers 11, in der dieser funktionsgemäß keinen Schall abgibt, ist der drehbare Teil 16 so gedreht, dass er die Schallaustrittsöffnung 14 vollständig und einstückig abdeckt (vgl. Figur 6).

In einer Gebrauchsstellung des Lautsprechers 11, in der dieser funktionsgemäß Schall in einen den Lautsprecher 11 umgebenden Raum abgibt, ist der drehbare Teil 16 so gedreht, dass er die Schallaustrittsöffnung 14 freigibt, insbesondere vollständig freigibt, und die wenigstens eine zweite Schalllenkungsfläche 17 gemeinsam mit der wenigstens einen ersten Schalllenkungsfläche 15 des zentralen feststehenden Teils 13 eine akustisch wirksame Gesamtschalllenkungsfläche 15, 17 bilden.

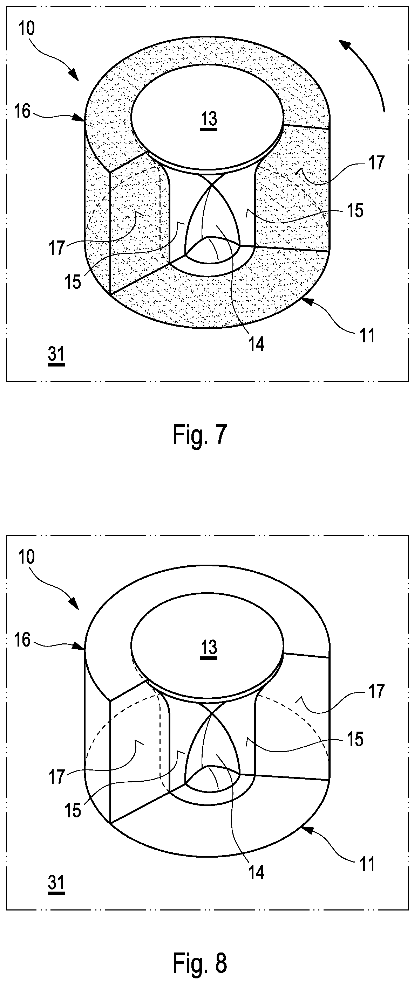

Wie in Figur 1 zu erkennen ist, die die Gebrauchsstellung des Lautsprechers 1 zeigt, ist bei dem vorliegenden Beispiel der drehbare Teil 16 des Schalllenkungskörpers 12 einstückig als Ringsegment ausgebildet, ohne jedoch zwingend auf diese konkrete Ausgestaltung beschränkt zu sein. Wie in Figur 1 zu sehen ist, bildet das Ringsegment 16 keinen geschlossenen Ring, sondern erstreckt sich vorliegend über einen Winkel von etwa 270 °. Die Schallaustrittsöffnung 14 öffnet sich in dem gezeigten Ausführungsbeispiel über einen Winkel von etwa 40 °. An die Schallaustrittsöffnung 14 schließen seitlich die beiden ersten Schalllenkungsflächen 15 an, so dass die die zweiten Schalllenkungsflächen 17 bildenden Querschnittsendflächen des Ringsegments 16 gemeinsam mit den beiden ersten Schalllenkungsflächen 15 die akustisch wirksame Gesamtschalllenkungsfläche 15, 17 bilden. Hierzu kann die akustisch wirksame Gesamtschalllenkungsfläche 15, 17 insbesondere eine stetige, d. h. im Wesentlichen stufenlose, Fläche sein, wie beispielsweise in Figur 1 dargestellt ist, so dass der aus der Schallaustrittsöffnung 14 austretende Schall an den jeweiligen Schalllenkungsflächen 15 und 17, welche gemeinsam die Gesamtschalllenkungsfläche 15, 17 bilden, (im Wesentlichen ungehindert) reflektiert werden kann, die damit gemeinsam die Schallausbreitung beeinflussen. Die gebildete Gesamtschalllenkungsfläche 15, 17 kann eine wie in Figur 1 gezeigte vollständige oder abschnittsweise ebene (plane) Erstreckung oder eine vollständige oder teilweise gewölbte Erstreckung oder eine Kombination aus einer teilweise ebenen (planen) und einer teilweise gewölbten Erstreckung (vgl. Figuren 7 und 8) aufweisen.

In der Nichtgebrauchsstellung des Lautsprechers 11 ist der drehbare Teil 16 gegenüber der in Figur 1 dargestellten Position um etwa 180 ° gedreht, so dass der drehbare Teil 16 die Schallaustrittsöffnung 14 vollständig und einstückig abdeckt. Zusätzlich deckt der drehbare Teil 16 im vorliegenden Beispiel in der Nichtgebrauchsstellung die ersten Schalllenkungsflächen 15 vollständig ab. Dies ist jedoch für die Erfindung nicht zwingend erforderlich.

Eine Grenzlinie, entlang welcher die Schalllenkungsflächen 15 und 17 jeweils benachbart zueinander verlaufen, kann einen geraden, im Wesentlichen zur Drehachse 18 parallelen Verlauf aufweisen, wie dies bei dem in Figur 1 dargestellten Ausführungsbeispiel der Fall ist. Die Erfindung ist jedoch nicht zwingend auf den gezeigten Verlauf der Grenzlinie beschränkt. Die Grenzlinie kann beispielsweise einen geraden, jedoch zur Drehachse 18 geneigten Verlauf aufweisen. Die Grenzlinie kann alternativ einen gekrümmten Verlauf aufweisen oder eine Kombination aus einem teilweise geraden und teilweise gekrümmten Verlauf.

Des Weiteren ist der drehbare Teil 16 des in Figur 1 dargestellten Lautsprechers 11 ohne zwingende Beschränkung hierauf aus einem transparenten Material (z. B. Kunststoff oder Glas) gebildet.

Ferner sind bei dem vorliegend gezeigten Lautsprecher 11 Leuchtmittel 19 (z. B. LEDs) zur wahlweisen Beleuchtung des drehbaren Teils 16 in der Nichtgebrauchsstellung und/oder in der Gebrauchsstellung vorgesehen. Die Leuchtmittel 19 sind zum Beispiel am feststehenden Teil 13 gehalten, wie in Figur 2 dargestellt ist.

Für eine zusätzliche gezielte Beleuchtung ist vorliegend außerdem ein Lichtleiter 20 vorgesehen. Dieser ist derart angeordnet, dass er von dem/den Leuchtmittel(n) 19 emittiertes Licht aufnehmen und für die zusätzliche Beleuchtung verwenden kann. Insbesondere ist der Lichtleiter 20 bei dem Ausführungsbeispiel des Lautsprechers 11 als Lichtleiterscheibe ausgebildet, die vorliegend bezüglich der Hochachse z an einer Unterseite des drehbaren Teils 16 angeordnet ist. Mittels der Lichtleiterscheibe 20 ist ein an ihrer umfänglichen Schmalseite verlaufender, für einen Nutzer bei aktivierter Beleuchtung durch das/die Leuchtmittel 19 wahrnehmbarer Leuchtring ausgebildet. Zudem können auf einer dem drehbaren Teil 16 zugewandten Oberfläche der Lichtleiterscheibe 20 ein Schriftzug, grafische Symbole und dergleichen angebracht sein, die sich von der Lichtleiterscheibe 20 optisch abheben, sobald die Beleuchtung aktiviert ist. Beispielsweise kann die Lichtleiterscheibe 20 auf der dem drehbaren Teil 16 zugewandten Oberseite mit einer Metallschicht 29 belegt sein, aus welcher der Schriftzug bzw. andere darzustellende optische Elemente/Symbole ausgestanzt oder weggelasert sein kann/können.

Ein Drehantrieb des drehbaren Teils 16 ist bei dem beispielhaften Lautsprecher 11 mittels einer Verzahnung 21 und einem in diese eingreifenden Ritzel 22 verwirklicht. Das Ritzel 22 ist wiederum über einen Elektromotor 23 antreibbar. Der drehbare Teil 16 wird vorliegend von einer tellerartigen, um die Drehachse 18 drehbaren Aufnahme 24 gehalten, an welcher die Verzahnung 21 ausgebildet ist.

Wie insbesondere in der Schnittansicht der Figur 2 zu erkennen ist, ist ein Schallerzeuger 25 (z. B. eine Membran) in einem Lautsprechergehäuse 26 aufgenommen. Für die translatorische Bewegung des Lautsprechers 11 in Richtung der Hochachse z zwischen der im Verkleidungsteil versenkten und der aus diesem ausgefahrenen Position ist an einer Außenseite des Lautsprechergehäuses 26 beispielhaft eine weitere Verzahnung 27 ausgebildet, in die ein weiteres Ritzel 28 eingreift. Ein Antrieb des Ritzels 28 kann ebenfalls über den Elektromotor 23 erfolgen (nicht dargestellt) oder über einen weiteren (ebenfalls nicht dargestellten) Elektromotor.

Die beiden dargestellten Zahnradantriebe 21 und 22 bzw. 27 und 28 sind lediglich als beispielhafte Implementierungen zur Erzeugung der Drehbewegung des drehbaren Teils 16 und der translatorischen Bewegung des gesamten Lautsprechers 11 zu verstehen. Keinesfalls ist die Erfindung zwingend auf die gezeigten Zahnradantriebe beschränkt. Alternative Antriebsmechanismen zur Erzeugung der genannten Bewegungen sind denkbar und können entsprechend den konkreten Anforderungen gewählt werden.

Figur 3 stellt eine perspektivische Ansicht einer Lautsprecheranordnung 10 sowie eines Fahrzeugs 30 jeweils nach einer Ausführungsform der Erfindung in einer ersten Betriebssituation dar. Die Lautsprecheranordnung 10 weist den in den Figuren 1 und 2 gezeigten beispielhaften Lautsprecher 11 auf, der in der ersten Betriebssituation in dem Verkleidungsteil 31, das vorliegend beispielhaft und ohne zwingende Beschränkung hierauf ein Armaturenbrett ist, versenkt angeordnet ist. Die Beleuchtung des drehbaren Teils 16 ist deaktiviert. Dieser erste Betriebszustand wird bevorzugt bei ausgeschaltetem und abgestelltem Fahrzeug 30 eingenommen.

Figur 4 stellt die Lautsprecheranordnung 10 sowie das Fahrzeug 30 aus Figur 3 in einer zweiten Betriebssituation dar, die eingenommen wird, wenn sich ein Nutzer (nicht dargestellt) dem Fahrzeug 30 nähert, d. h. das Fahrzeug zum Beispiel berührt oder Kontakt zum Fahrzeug 30 über einen Fahrzeugschlüssel (nicht dargestellt) oder über ein mobiles Endgerät (ebenfalls nicht dargestellt) herstellt. In der zweiten Betriebssituation wird die Beleuchtung des Lautsprechers 11 bzw. des drehbaren Teils 16 aktiviert. Der Lautsprecher 11 verbleibt jedoch in seiner im Verkleidungsteil 31 versenkten Position. Dieser Zustand ist in Figur 5 in einer vergrößerten Ansicht der Lautsprecheranordnung 10 aus Figur 4 erneut dargestellt. Die zweite Betriebssituation wird von einem Nutzer des Fahrzeugs 30 als eine Art Begrüßung wahrgenommen.

Figur 6 stellt eine vergrößerte Ansicht der Lautsprecheranordnung 10 aus Figur 3 in einer dritten Betriebssituation dar. In dieser ist der Lautsprecher 11 aus dem Verkleidungsteil 31 ausgefahren. Der Lautsprecher 11 befindet sich jedoch noch in seiner Nichtgebrauchsstellung, in welcher der (vorliegend transparente) drehbare Teil 16 die Schallaustrittsöffnung 14 vollständig verdeckt.

Figur 7 stellt eine vergrößerte Ansicht der Lautsprecheranordnung 10 aus Figur 3 in einer vierten Betriebssituation dar. In dieser befindet sich der Lautsprecher 11 in seiner Gebrauchsstellung. Der drehbare Teil 16 ist gegenüber der in Figur 6 gezeigten Stellung um etwa 180 ° gedreht, so dass er die Schallaustrittsöffnung 14 nun vollständig freigibt und die ersten und zweiten Schalllenkungsflächen 15 und 17 gemeinsam akustisch aktiv sind, d. h. die Schalllenkungsflächen 15 und 17 bilden eine im Wesentlichen stetige, stufenlose Gesamtschalllenkungsfläche 15, 17, die eine vollständige (vgl. Figur 1) oder abschnittsweise ebene (plane) Erstreckung oder eine vollständige oder teilweise gewölbte Erstreckung oder eine Kombination aus einer teilweisen ebenen (planen) und einer teilweise gewölbten Erstreckung aufweisen, wie dies beispielhaft in den Figuren 7 und 8 dargestellt ist. Die Grenzlinie zwischen den Schalllenkungsflächen 15 und 17 kann einen Verlauf aufweisen, wie er im Zusammenhang mit der Beschreibung der Figur 1 erläutert wurde.

Figur 8 stellt eine vergrößerte Ansicht der Lautsprecheranordnung 10 aus Figur 3 in einer fünften Betriebssituation dar. In dieser ist die Beleuchtung des Lautsprechers 11 bzw. des drehbaren Teils 16 deaktiviert. Der Lautsprecher 11 befindet sich hierbei in seiner Gebrauchsstellung. Diese Betriebssituation kann während einer Fahrt des Fahrzeugs 30 eingenommen werden, um zu verhindern, dass die Beleuchtung Spiegelungen in einer Frontscheibe hervorruft, die einen Fahrer ablenken oder stören könnten.

Die Erfindung ermöglicht neben den bereits beschriebenen Vorteilen einen hohen Grad einer visuell ansprechenden Darstellung des Lautsprechers 11. Eine Signalwirkung des Lautsprechers 11 wird dadurch erhöht.

Die tatsächliche Drehposition des drehbaren Teils 16 (d. h. die Gebrauchsstellung bzw. Nichtgebrauchsstellung) macht die Einsatzbereitschaft des Lautsprechers 11 deutlich. Wenn der drehbare Teil 16 vor der Schallaustrittsöffnung 14 positioniert ist, wird klar kommuniziert, dass der Lautsprecher 11 noch nicht einsatzbereit ist. Gibt der drehbare Teil 16 die Schallaustrittsöffnung 14 frei, signalisiert dies deutlich, dass der Lautsprecher 11 einsatzbereit ist.

Der drehbare Teil 16 kann während einer Wiedergabe von Musik abhängig vom akustischen Inhalt der Wiedergabe (z. B. Rhythmus, Melodie, Tonhöhe etc.) geringfügig um die Idealposition hin und her gedreht werden, ohne die akustischen Eigenschaften wesentlich zu beeinträchtigen.

Der drehbare Teil 16 kann aus einem transparenten Material (z. B. Glas) gebildet sein, der wahlweise von innen beleuchtet sein kann.

Zwischen dem zentralen feststehenden Teil 13 und dem drehbaren Teil 16 sind unterschiedliche Materialkombinationen und/oder unterschiedlich akustisch wirksame Ausgestaltungen der ersten und zweiten Schalllenkungsflächen 15, 17 möglich. Zum Beispiel kann der zentrale feststehende Teil 13 ein akustisch optimales Material aufweisen und der drehbare, äußere Teil ein anderes (z. B. visuell ansprechenderes) Material.

Die Drehbewegung des drehbaren Teils 16 kann programmgesteuert zum Beispiel mittels einer Steuereinrichtung (nicht dargestellt) erfolgen. Es sind unterschiedliche Drehungen möglich. Der drehbare Teil 16 kann z. B. 180 ° + 360 ° gedreht werden, also zwischen der Nichtgebrauchsstellung und der Gebrauchsstellung eine zusätzliche volle Umdrehung durchführen, was einen visuell ansprechenden Eindruck erzeugt. Die Steuereinrichtung kann zugleich verwendet werden, die translatorische Bewegung des Lautsprechers 11 zwischen der versenkten und der ausgefahrenen Position zu steuern.

Sind in dem Fahrzeug 30 mehrere Lautsprecheranordnungen 10 vorgesehen, können die jeweiligen drehbaren Teile 16 links und rechts gegenläufig gedreht werden.

Die Drehbewegung des drehbaren Teils 16 und/oder die translatorische Bewegung des Lautsprechers 11 kann/können mit einer Aktivierung/Deaktivierung der Beleuchtung kombiniert werden.

### BEZUGSZEICHENLISTE:

- 10: Lautsprecheranordnung
- 11: Lautsprecher
- 12: Schalllenkungskörper
- 13: Zentraler, feststehender Teil
- 14: Schallaustrittsöffnung
- 15: Erste Schalllenkungsfläche
- 16: Drehbarer Teil (z. B. Ringsegment)
- 17: Zweite Schalllenkungsfläche
- 18: Drehachse
- 19: Leuchtmittel
- 20: Lichtleiter (z. B. Lichtleiterscheibe)
- 21: Verzahnung
- 22: Ritzel
- 23: Elektromotor
- 24: Tellerartige Aufnahme
- 25: Schallerzeuger (z. B. Membran)
- 26: Lautsprechergehäuse
- 27: Verzahnung
- 28: Ritzel
- 29: Metallschicht

- 30: Kraftfahrzeug
- 31: Verkleidungsteil (z. B. Armaturenbrett)
- 32: Fahrzeugsäule (z. B. A-Säule)

- z: Hochachse

## Patentansprüche

1. Lautsprecheranordnung (10) für ein Kraftfahrzeug (30), aufweisend einen in einem Verkleidungsteil (31) des Kraftfahrzeugs (30) wahlweise versenkbaren und aus diesem ausfahrbaren Lautsprecher (11) mit einem Schalllenkungskörper (12), der einen zentralen feststehenden Teil (13) mit einer Schallaustrittsöffnung (14) und wenigstens einer ersten Schalllenkungsfläche (15) sowie einen relativ und koaxial zum zentralen feststehenden Teil (13) drehbaren Teil (16) mit wenigstens einer zweiten Schalllenkungsfläche (17) aufweist, wobei der drehbare Teil (16) in einer Nichtgebrauchsstellung des Lautsprechers (11), in welcher der Lautsprecher (11) keinen Schall abgibt, derart gedreht ist, dass er die Schallaustrittsöffnung (14) vollständig und einstückig abdeckt, und der drehbare Teil (16) in einer Gebrauchsstellung des Lautsprechers (11), in welcher der Lautsprecher (11) Schall abgibt, derart gedreht ist, dass er die Schallaustrittsöffnung (14) freigibt und die wenigstens eine zweite Schalllenkungsfläche (17) gemeinsam mit der wenigstens einen ersten Schalllenkungsfläche (15) des zentralen feststehenden Teils (13) eine akustisch wirksame Gesamtschalllenkungsfläche (15, 17) bilden.

2. Lautsprecheranordnung nach Anspruch 1, bei welcher der drehbare Teil (16) einstückig als Ringsegment ausgebildet ist.

3. Lautsprecheranordnung nach Anspruch 1 oder 2, bei welcher der drehbare Teil (16) in der Nichtgebrauchsstellung die wenigstens eine erste Schalllenkungsfläche (15) zumindest teilweise abdeckt.

4. Lautsprecheranordnung nach einem der vorhergehenden Ansprüche, bei welcher der drehbare Teil (16) in der Gebrauchsstellung im Wesentlichen um 180 ° gegenüber der Nichtgebrauchsstellung gedreht ist.

5. Lautsprecheranordnung nach einem der vorhergehenden Ansprüche, bei welcher der drehbare Teil (16) wenigstens zu einem Teil aus einem transparenten und/oder transluzenten Material gebildet ist.

6. Lautsprecheranordnung nach einem der vorhergehenden Ansprüche, bei welcher ein Leuchtmittel (19) zur wahlweisen Beleuchtung des drehbaren Teils (16) in der Nichtgebrauchsstellung und/oder in der Gebrauchsstellung vorgesehen ist.

7. Lautsprecheranordnung nach dem vorhergehenden Anspruch, bei welcher ein Lichtleiter (20) zur gezielten Führung und Verteilung von emittiertem Licht des Leuchtmittels (19) vorgesehen ist.

8. Lautsprecheranordnung nach einem der vorhergehenden Ansprüche, bei welcher der Lautsprecher (11) zu seiner ausschließlichen Verwendung in der Nichtgebrauchsstellung wahlweise aus dem Verkleidungsteil (31) ausfahrbar ist.

9. Lautsprecheranordnung nach einem der vorhergehenden Ansprüche, bei welcher der zentrale feststehende Teil (13) und der drehbare Teil (16) aus unterschiedlich akustisch wirksamen Werkstoffen gebildet sind und/oder die erste Schalllenkungsfläche (15) und die zweite Schalllenkungsfläche (17) unterschiedlich akustisch wirksame Oberflächen aufweisen.

10. Kraftfahrzeug (30) mit einem Verkleidungsteil (31) und einer Lautsprecheranordnung (10) nach einem der vorhergehenden Ansprüche.
